Europäisches Patentamt

European Patent Office

Office européen des brevets

(19)

(11) Numéro de publication : **0 311 495 B1**

# FASCICULE DE BREVET EUROPEEN

(12)

(45) Date de publication du fascicule du brevet :
**02.01.92 Bulletin 92/01**

(51) Int. Cl.$^5$ : **G07F 7/08,** G07F 7/02

(21) Numéro de dépôt : **88402488.6**

(22) Date de dépôt : **30.09.88**

(54) **Dispositif d'exploitation de cartes à mémoire à prépaiement.**

(30) Priorité : **09.10.87 FR 8713952**

(43) Date de publication de la demande :
**12.04.89 Bulletin 89/15**

(45) Mention de la délivrance du brevet :
**02.01.92 Bulletin 92/01**

(84) Etats contractants désignés :
**DE ES GB IT NL**

(56) Documents cités :
**EP-A- 0 041 261
FR-A- 2 503 423
US-A- 3 935 933
PATENT ABSTRACTS OF JAPAN, vol. 10, no.
327 (P-513) [2383], 7 novembre 1986, page 79 P
513; & JP-A-61 133 470**

(56) Documents cités :
**PATENT ABSTRACTS OF JAPAN, vol. 11, no.
129 (P-570) [2576], 23 avril 1987, page 58 P 570;
& JP-A-61 271 569
TOUTE L'ELECTRONIQUE, no. 504, mai 1985,
pages 70-77, Paris, FR; H. LAMBERT: "La
carte à circuit intégré"**

(73) Titulaire : **SGS-THOMSON
MICROELECTRONICS S.A.
7, Avenue Galliéni
F-94250 Gentilly (FR)**

(72) Inventeur : **Brisson, Pierre
Cabinet Ballot-Schmit 84, Avenue Kléber
F-75116 Paris (FR)**

(74) Mandataire : **Ballot, Paul Denis Jacques et al
Cabinet Ballot-Schmit 7, rue le Sueur
F-75116 Paris (FR)**

Jouve, 18, rue Saint-Denis, 75001 PARIS

## Description

L'invention concerne les dispositifs d'exploitation de cartes à mémoire à prépaiement, tout particulièrement de cartes à puces.

Une carte à mémoire à prépaiement est une carte qu'un consommateur peut acheter, pour une somme d'argent déterminée, et qui lui permet ensuite de bénéficier de biens ou services en quantité ou en valeur proportionnelle au prix qu'il a payé pour acheter la carte. Cette quantité ou cette valeur est inscrite dans une zone de mémoire de la carte et elle est décrémentée au fur au mesure que le consommateur utilise la carte pour se procurer les biens ou services dont la carte lui permet de bénéficier. C'est une sorte de portemonnaie ou portefeuille électronique.

L'exemple le plus connu est la carte à mémoire téléphonique que l'utilisateur peut introduire dans un appareil téléphonique mis à la disposition du public, pour obtenir une communication téléphonique ; la mémoire de la carte contient une information sur le nombre d'unités de temps ou d'argent qui reste disponible ; ce nombre est décrémenté à intervalles réguliers pendant la communication jusqu'à ce que celle-ci se termine. Si le nombre d'unités résiduelles n'est pas nul à la fin de la communication, la carte reste valable pour une communication ultérieure.

Les cartes à mémoire que l'on considérera plus spécialement ici sont essentiellement les cartes comportant un composant électronique semiconducteur, car ce sont celles qui semblent actuellement offrir le plus de sécurité aussi bien pour le prestataire de biens ou services que pour le consommateur.

Or la sécurité contre le vol (vol d'argent ou de biens ou de services) et contre les dégradation est un facteur essentiel à prendre en compte dans l'installation de systèmes de distribution automatique de biens ou de services.

Si l'administration des téléphones en France s'est lancée très tôt dans l'équipement à très grande échelle de cabines téléphoniques publiques pourvues de dispositifs d'exploitation de cartes à mémoire prépayées, c'est bien pour éviter :

— le vol de services par établissement frauduleux de communications téléphoniques sans contrepartie financière,

— les dégradations de cabines téléphoniques par des voleurs qui cherchent à récupérer les pièces de monnaie accumulées au fur et à mesure de l'utilisation payante normale des cabines,

— et aussi le vol d'argent sur les personnes.

Cependant, si l'utilisation de cartes à mémoire prépayées permet au prestataire de services de bénéficier d'une sécurité plus grande, il n'en est pas forcément de même pour le consommateur.

Il risque de perdre la carte qu'il a achetée, ou de se la faire voler ; dans les deux cas, de ne pas pouvoir se la faire rembourser, sauf peut-être s'il s'agit d'une carte à code d'accès confidentiel qu'une tierce personne ne pourra en principe pas utiliser à son profit (mais de telles cartes nécessitent bien entendu des dispositifs d'exploitation complexes et coûteux, et le consommateur subira de toutes façon les ennuis de la perte ou du vol).

De plus, le consommateur va payer sa carte a priori plus cher que la valeur des biens ou services dont il momentanément besoin : par exemple il va acheter 40 unités de communication téléphonique alors qu'il n'a besoin dans l'immédiat que d'une dizaine d'unités. Il est vrai qu'il pourra ultérieurement bénéficier du résidu de valeur non utilisée, mais il ne sait quand il en aura besoin, ni même s'il en aura besoin un jour, et de toutes façons les risques de perte ou de vol augmenteront proportionnellement à la durée de non-utilisation de la carte.

Il est donc très réticent à accorder sa confiance aux prestataires de biens ou services qui, pour augmenter la sécurité de leurs systèmes de distribution automatique de biens ou services, veulent installer des dispositifs d'exploitation de cartes à prépaiement.

En d'autres mots, bien que l'utilisation de cartes prépayées puisse permettre au prestataire de biens ou services de bénéficier d'une plus grande sécurité, il n'en est pas toujours de même pour le consommateur ; ou, s'il en est de même pour le consommateur, celui-ci n'en est pas forcément convaincu ; ou encore, s'il en est convaincu, il pense parfois que d'autres inconvénients se présentent (nécessité d'un prépaiement de valeur supérieure aux besoins immédiats) et diminuent fortement l'intérêt d'adopter le système de prépaiement que lui propose le fournisseur de biens ou services.

Si ce fournisseur est aussi puissant que l'administration nationale des postes -télégraphes-téléphones, le consommateur sera bien obligé de se conformer au système imposé par cette administration ; mais pour beaucoup de prestataires de biens ou services en situation économique de concurrence, il sera impossible d'adapter un système à cartes de prépaiement, donc de bénéficier d'une sécurité améliorée, si ce système ne recueille pas l'assentiment de la majeure partie de la clientèle potentielle.

Pour permettre d'augmenter la sécurité des système de distribution automatique de biens ou services en facilitant la mise en place, aux postes de distribution de ces biens ou services, de dispositifs d'exploitation de cartes à mémoire à prépaiement, la présente invention propose une technique de réalisation de ces dispositifs d'exploitation, telle que l'on soit en mesure de vaincre plus facilement l'obstacle psychologique de la réticence des consommateurs vis à vis des systèmes de cartes à prépaiement.

US-A-3935933 divulgue un dispositif d'exploitation de cartes à prépaiement comportant au moins un lecteur de cartes dans lequel on peut introduire une carte prépayée pour déclencher la fourniture d'un bien ou d'un service au titulaire de la carte, ce lecteur de cartes étant apte à :

— lire une information mémorisée dans une première zone de mémoire de la carte, cette information représentant un crédit résiduel correspondant à une valeur de biens ou services disponibles pour le titulaire de la carte,

— autoriser la fourniture du bien ou du service si l'information lue correspond à un crédit suffisant,

— inscrire dans la première zone de mémoire une information correspondant à un nouveau crédit résiduel disponible,

— lire, dans une deuxième zone de mémoire de la carte, une information de date inscrite dans cette deuxième zone,

— indiquer la date courante au moment de l'utilisation de la carte,

— et inscrire dans la deuxième zone de mémoire une information sur la date courante.

Suivant ce document, le crédit mémorisé dans la carte lors de l'achat de celle-ci est supérieur à la somme payée par l'acheteur. On assure de cette manière une rémunération de la somme immobilisée par l'achat de la carte. Cependant, le montant pouvant être dépensé journellement est limité.

Selon l'invention, on propose un dispositif d'exploitation de cartes du type indiqué ci-dessus, comportant en outre :

— des moyens pour calculer et mémoriser une quantité proportionnelle au produit du crédit résiduel lu dans la première zone de mémoire par la différence entre la date courante et la date lue dans la deuxième zone de mémoire.

Grâce à cette constitution nouvelle du dispositif d'exploitation de cartes à prépaiement, il devient possible de quantifier le préjudice subi par le consommateur du fait qu'il a immobilisé une somme d'argent en vue de la fourniture d'un bien ou d'un service dont il n'a pas profité tout de suite. L'utilisateur est alors à même de demander une compensation au prestataire des biens ou des services, par exemple sous forme d'un avoir sur un prépaiement ultérieur ou sous forme d'un rechargement dans la première zone de mémoire, à titre gratuit, d'une information correspondant à une certaine valeur de biens ou de services.

Dans une réalisation préférentielle, le résultat du calcul de la "compensation" sera inscrit dans une troisième zone de mémoire de la carte. De nombreux modes de réalisation de l'invention sont possibles. Ils dépendent de la complexité plus ou moins grande que l'on accepte pour l'ensemble du système de distribution de biens et services dans lequel s'insère le dispositif d'exploitation des cartes à mémoire selon l'invention.

Ainsi, l'invention ne sera pas incorporée de la même manière dans un système de distribution sous forme d'un réseau de postes de distribution piloté par un ordinateur central, ou au contraire sous forme d'un ensemble de postes de distribution autonomes.

Par "dispositif d'exploitation de cartes" on entend dans la présente description l'ensemble du lecteur de cartes et de la carte elle-même, voire même aussi l'ordinateur central s'il s'agit d'un réseau centralisé. En effet il faut bien comprendre que certaines opérations, par exemple le calcul et la mémorisation de la compensation, peuvent être effectuées soit par le lecteur de cartes, soit par la carte elle-même lorsqu'elle est insérée dans l'appareil, soit enfin par l'ordinateur central.

Par "lecteur de cartes" on entend un appareil dans lequel on peut insérer une carte à mémoire à prépaiement pour non seulement lire des informations qu'elle contient mais aussi pour y écrire d'autres informations, et plus généralement pour transmettre divers signaux électriques entre la carte et le lecteur, et pour transmettre, directement ou indirectement, à un organe de distribution de biens ou de services, un signal d'autorisation de fourniture d'un bien ou d'un service (cette information peut transiter par un ordinateur central).

Dans certaines réalisations, on préférera que les informations de date de la deuxième zone de mémoire, ainsi que les informations de conpensation calculée, soient enregistrées aussi dans le lecteur de cartes ou dans l'ordinateur central, ceci à des fins de contrôle.

Les informations successives de crédit résiduel, enregistrées dans la première zone de mémoire lors des utilisations successives de la carte, peuvent être inscrites soit à la place de l'information précédemment inscrite, soit à des adresses successives de la première zone de mémoire ; cette dernière solution consomme plus de mémoire (surtout de fait que dans beaucoup de cas on ne sait pas quel sera le nombre d'utilisations de la carte jusqu'à épuisement du crédit disponible) mais elle a l'avantage de conserver un historique des opérations effectuées. Il en est de même pour les informations de date de la deuxième zone de mémoire, et, s'il y a lieu, des informations de compensation de la troisième zone de mémoire.

Si une information de compensation est inscrite en remplacement d'une information précédemment inscrite, le dispositif d'exploitation comportera des moyens de calcul de la somme de la nouvelle compensation et de la compensation précédente, de manière que s'inscrive à chaque fois, dans la troisième zone de mémoire la somme cumulée des compensations calculées à chaque utilisation. Ce calcul d'une somme cumulée peut être effectué soit dans le lecteur de cartes, soit dans la carte.

En principe, une horloge fournissant la date courante est contenue dans le lecteur de cartes (ou dans l'ordinateur central s'il existe), mais on peut aussi concevoir des dispositifs dans lesquels c'est la carte qui contient l'horloge ; cela suppose que la carte soit alimentée en permanence par une source d'énergie électrique, ce qui est plus coûteux mais qui peut présenter certains avantages.

D'autres caractéristiques et avantages de l'invention apparaîtront à la lecture de la description qui suit et qui est faite en référence aux dessins annexés dans lesquels :

— la figue 1 représente un exemple d'application de cartes à prépaiement pour la distribution automatique de boissons.

— la figure 2 représente une architecture possible pour un dispositif d'exploitation de cartes incorporant l'invention.

— la figure 3 représente un organigramme de fonctionnement relatif aux étapes spécifiques de l'invention, dans le cas d'un système simple.

Etant donné la multiplicité des applications possibles et des modes de réalisations possibles de dispositifs d'exploitation de cartes dans lesquels la présente invention peut être utilisée, on ne décrira qu'une seule réalisation, très simple. L'homme de l'art spécialiste de la conception des dispositifs d'exploitation de cartes à mémoire à prépaiement pourra faire sans difficultés la transposition à d'autres réalisations compte tenu des explications données dans le présent brevet.

L'application choisie à titre d'exemple est celle d'un réseau de distributeurs de boissons. Il s'agit là de ce qu'on a appelé un réseau décentralisé : chaque appareil de distribution est autonome.

Les appareils comportent naturellement tous les mécanismes classiques de distribution des appareils fonctionnant avec des pièces de monnaie ou des jetons, mais les mécanismes d'introduction et de détection de pièces sont supprimés et remplacés par un lecteur de cartes à mémoire à prépaiement dont la fonction est d'autoriser l'actionnement des mêmes relais électromécaniques des mécanismes de distribution que ceux qui existent actuellement.

Dans cet exemple, les cartes sont des cartes à circuit-intégré comportant essentiellement des zones de mémoire.

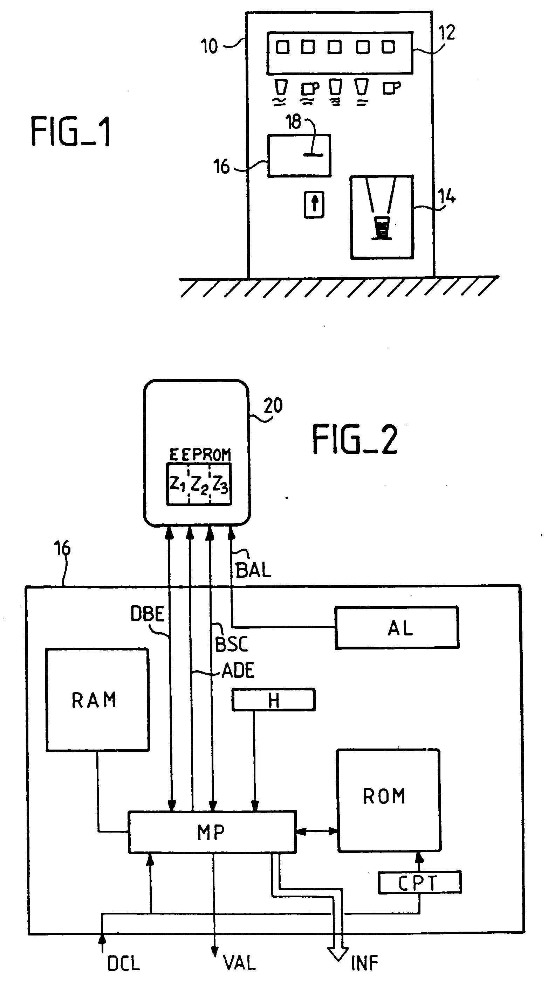

La figure 1 schématise sommairement cette application ; on y voit un distributeur de boissons 10 possèdant :

— à sa partie supérieure un tableau 12 de touches de sélection d'une boisson parmi plusieurs; pour simplifier on supposera que le prix des boissons est un prix unique P.

— à sa partie inférieure une zone de réception 14 de la boisson distribuée,

— et dans sa partie médiane un lecteur de cartes 16 avec une fente 18 pour l'introduction des cartes.

Pour ce qui concerne la partie mécanique du lecteur de carte, elle a été abondamment décrite dans de nombreuses publications et elle ne fait pas l'objet de l'invention.

Pour simplifier la description des circuits électroniques et des organigrammes de fonctionnement, on supposera que la carte comprend essentiellement une mémoire morte électriquement programmable et effaçable (mémoire EEPROM) et qu'elle est reliée au lecteur de cartes par :

— un bus d'adresses ADE,
— un bus de données DBE,
— un bus de signaux de contrôle BSC,
— un bus d'alimentation en énergie BAL ;

et on supposera dans cet exemple que le lecteur de cartes comprend essentiellement un microprocesseur MP et, reliés à ce microprocesseur,

— une mémoire morte ROM contenant à la fois des programmes d'instructions pour le microprocesseur et des coefficients fixes tels que la valeur P d'une boisson (mais ce prix peut être fourni par un registre programmable si on le désire) ; cette valeur n'est pas forcément exprimée dans une unité monétaire : la valeur P peut être systématiquement égale à 1.

— une mémoire vive de travail RAM,
— des sources d'énergie AL, y comprise pour alimenter le bus BAL qui fournit de l'énergie à la carte,
— et enfin une horloge H qui donne la date courante (jour, ou semaine, ou mois, etc selon qu'on désire une détermination plus ou moins précise de cette date).

Tous ces éléments sont représentés sur la figure 2, sur laquelle la carte est désignée par la référence 20.

Le lecteur de cartes reçoit un signal DCL de déclenchement de procédure, émis par exemple par suite de l'enfoncement d'une des touches du tableau de sélection 12 de la figure 1.

Si la procédure se déroule normalement, le lecteur fournira un signal VAL d'autorisation de distribution d'une boisson ; si elle se déroule anormalement, ce signal ne sera pas fourni ; d'autres signaux sont représentés sous forme d'un bus INF qui peut être relié par exemple à un tableau d'affichage lumineux sur lequel s'éclairent des zones indiquant par exemple "retirez votre carte" ou "crédit insuffisant" ou "votre compte a été débité de X unités", etc.

Le dispositif d'exploitation de cartes à mémoire fonctionne sous la commande du microprocesseur MP, contrôlé par le programme contenu dans la mémoire morte ROM. Le programme se déroule sous la commande d'un compteur d'instructions CPT dont le comptage est déclenché par le signal DCL et qui commande l'adressage de la mémoire ROM.

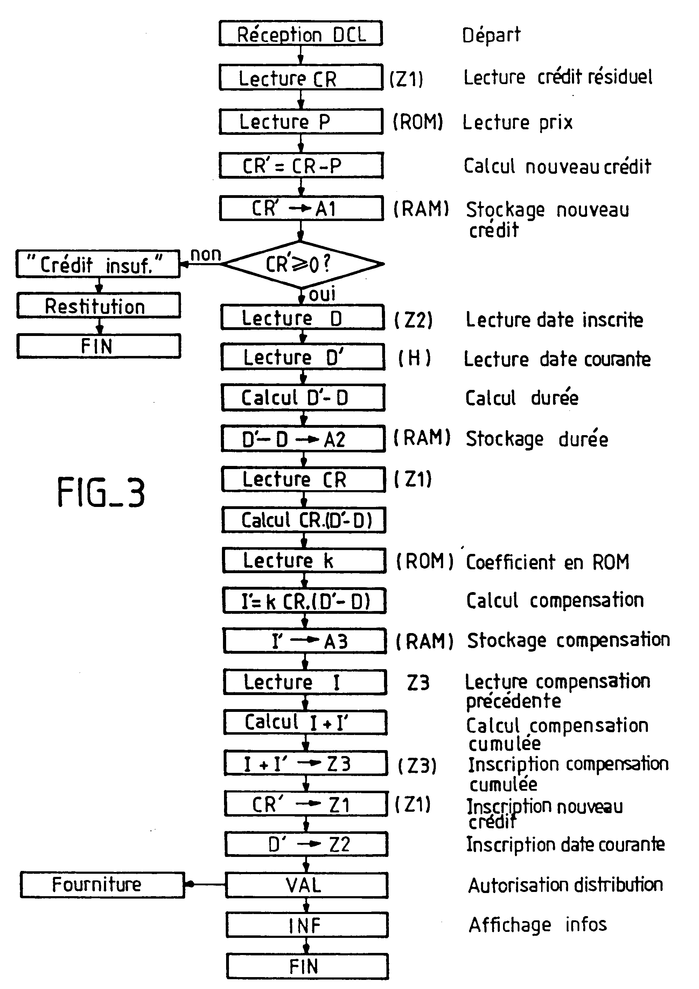

L'organigramme de fonctionnement du dispositif est schématisé à la figure 3 et est détaillé ci-dessous.

Le démarrage est déclenché par le signal DCL. Le microprocesseur va chercher le contenu CR inscrit dans la première zone Z1 de la mémoire EEPROM (on supposera que la zone Z1 correspond à une seule adresse désignée par le microprocesseur). Ce contenu représente le crédit résiduel disponible.

Le microprocesseur va ensuite chercher le coefficient P dans la mémoire morte ROM, à une adresse spécifiée dans le programme.

Puis il effectue la soustraction CR-P ; le résultat CR′ est stocké à une adresse A1 de la mémoire de travail RAM.

Le résultat CR′ est comparé à zéro ; s'il est négatif, le crédit est insuffisant et l'affichage d'une mention correspondante peut être effectué par l'intermédiaire d'un ordre transmis par le bus INF ; la carte est restituée ; la procédure est terminée.

Si le résultat CR′ est positif ou nul la procédure continue ; le microprocesseur va chercher la date D, précédemment inscrite dans la deuxième zone Z2 de la mémoire EEPROM de la carte. On supposera encore qu'il s'agit d'une information écrite à une adresse unique.

Le microprocesseur lit ensuite la date courante au moment du fonctionnement, ceci à partir de l'horloge H ou d'un registre régulièrement, incrémenté par cette horloge, ou dans une adresse de mémoire RAM qui contient en permanence la date courante D′. La date D′ de même que la date D peut être la date du jour, ou le numéro de la semaine de l'année, etc.

Le microprocesseur calcule la durée D′-D qui sépare la transaction en cours de la dernière transaction ayant donné lieu à l'inscription de la date D (à noter que lors du paiement une date de prépaiement D0 est inscrite dans la deuxième zone de mémoire Z2, en même temps qu'est inscrit dans la première zone Z1 un crédit initial CR0). La durée D′-D est stockée à une adresse A2 de la mémoire RAM.

Le crédit résiduel CR inscrit dans la première zone Z1 de la carte est à nouveau lu (on aurait pu aussi stocker CR dans la mémoire RAM lors de la première lecture, et le lire dans la mémoire RAM pour cette deuxième lecture). Le microprocesseur calcule le produit (D′-D) · Cr ; puis il lit un coefficient K contenu dans la mémoire ROM ou dans un registre accessible par le microprocesseur ; puis il fait le calcul de la compensation I′ avec

$$I' = k \, CR \cdot (D'\text{-}D).$$

Cette compensation est stockée à une adresse A3 de la mémoire RAM.

Puis le microprocesseur va lire, dans une troisième zone Z3 de la mémoire EEPROM de la carte, la compensation I précédemment inscrite. On supposera dans cet exemple que la compensation I précédemment inscrite est la somme cumulée des compensations calculées à chaque fois à partir du produit d'un crédit résiduel par une durée séparant deux distributions de biens ; on supposera également dans ces conditions que la zone Z3 ne comporte qu'une seule adresse.

L'addition de I et I′ est effectuée pour obtenir une nouvelle compensation cumulée. Le résultat est inscrit dans la troisième zone Z3 de la mémoire de la carte.

Puis le nouveau crédit résiduel CR′ contenu à l'adresse A1 de la mémoire vive RAM est transféré dans la première zone Z1 de la carte en remplacement du crédit précédent CR ; la date courante D′ fournie par l'horloge est transférée dans la deuxième zone Z2 en remplacement de la date précédente D. Le signal VAL d'autorisation de distribution est alors émis et une boisson est distribuée. Des informations peuvent alors être affichées sous le contrôle de signaux envoyés par le bus INF, par exemple un voyant lumineux s'allume au niveau d'une inscription du genre "retirez votre carte" ; on peut aussi envisager que le microprocesseur envoie par le bus INF une information sur le crédit résiduel restant CR′ ainsi que sur la compensation I′ ou la compensation cumulée I + I′. On peut enfin imaginer qu'un calcul CR″ = CR′ + I′ soit effectué et enregistré en remplacement de CR, la zone de mémoire Z3 étant dès lors inutile, sauf à des fins de vérification.

Bien entendu de très nombreuses variantes d'exécution sont possibles en ce qui concerne l'architecture générale du système ; en particulier, il est habituel de prévoir des architectures qui minimisent le nombre de connexions entre la carte et le lecteur ; il est préférable alors que la carte comprenne des circuits électroniques assurant la lecture et l'écriture dans les zones Z1, Z2, Z3, le microprocesseur fournissant des instructions réduites et les bits de données étant transmis en série sur un fil plutôt qu'en parallèle sur plusieurs fils.

En ce qui concerne les applications de la présente invention, elles sont d'autant plus intéressantes que les biens ou services distribués sont plus coûteux donc que le prépaiement fait par le consommateur est plus important.

L'invention serait intéressante par exemple pour des cartes d'utilisation d'autoroutes à péage, des cartes de parkings payants, etc.

## Revendications

1. Dispositif d'exploitation de cartes à mémoire prépayées, comportant au moins un lecteur de cartes (16) dans lequel on peut introduire une carte prépayée (20) pour déclencher la fourniture d'un bien ou d'un service, ce dispositif étant apte à :

— lire une information (CR) mémorisée dans une première zone de mémoire (Z1) de la carte, cette information représentant un crédit résiduel disponible pour l'obtention de biens ou services,

— autoriser la fourniture du bien ou du service si l'information lue correspond à une crédit suffisant,

— inscrire dans la première zone (Z1) de mémoire une information correspondant à un nouveau crédit résiduel (CR') disponible,

— lire, dans une deuxième zone de mémoire (Z2) de la carte, une information de date (D) inscrite dans cette deuxième zone,

— indiquer la date courante (D') au moment de l'utilisation de la carte,

— et inscrire dans la deuxième zone de mémoire (Z2) une information sur la date courante, caractérisé en ce que le dispositif d'exploitation de cartes comporte en outre :

— des moyens pour calculer et mémoriser une quantité (I') proportionnelle au produit du crédit résiduel (CR) lu dans la première zone de mémoire (Z1) par la différence (D'-D) entre la date courante et la date lue dans la deuxième zone de mémoire.

2. Dispositif d'exploitation de cartes à mémoire selon la revendication 1, caractérisé en ce qu'il comporte des moyens pour inscrire dans une troisième zone (Z3) de la mémoire de la carte une information fonction de la quantité (I') proportionnelle au produit du crédit résiduel (CR) par la différence entre les deux dates (D'-D).

3. Dispositif d'exploitation de cartes selon la revendication 2, caractérisé en ce qu'il comporte des moyens pour lire le contenu (I) de la troisième zone, des moyens pour calculer la somme de ladite quantité (I') et du contenu (I) lu dans la troisième zone, et des moyens pour inscrire cette somme dans la troisième zone de mémoire.

4. Dispositif selon l'une des revendications 1 à 3, caractérisé en ce qu'au moins l'une des zones de mémoire comporte une seule adresse, et en ce que, dans cette zone, l'information correspondant à cette zone est inscrite en remplacement de l'information précédemment inscrite.

5. Dispositif selon l'une quelconque des revendications 1 à 4, caractérisé en ce qu'au moins l'une des zones de mémoire, comporte plusieurs adresses, et en ce que, dans cette zone, l'information correspondante est inscrite à des adresses successives correspondant aux utilisations successives de la carte.

6. Dispositif selon la revendication 1, caractérisé en ce qu'il comporte des moyens pour calculer un nouveau crédit résiduel disponible qui représente l'information lue dans la première zone, diminuée d'une valeur du bien ou du service fourni, et additionné de ladite quantité proportionnelle, et des moyens pour inscrire ce nouveau crédit résiduel dans la première zone de mémoire (Z1) de la carte.

**Patentansprüche**

1. Vorrichtung zur Verwendung von vorbezahlten Speicherkarten, die wenigstens einen Kartenleser (16) umfaßt, in welchen eine vorausbezahlte Karte (20) eingeführt werden kann, um die Lieferung einer Ware oder einer Dienstleistung auszulösen, wobei diese Vorrichtung dazu geeignet ist, um :

— eine in einer ersten Speicherzone (Z1) der Karte gespeicherte Information (CR) zu lesen, wobei diese Information einen verfügbaren Restkredit für das Erhalten von Waren oder Dienstleistungen darstellt ;

— die Lieferung der Ware oder der Dienstleistung zu gestatten, wenn die ausgelesene Information einem ausreichenden Kredit entpricht,

— in der ersten Speicherzone (Z1) eine Information einzuschreiben, die einem neuen verfügbaren Restkredit (CR') entspricht,

— in einer zweiten Speicherzone (Z2) der Karte eine Datum-Information (D), die in dieser zweiten Zone eingeschrieben ist, zu lesen,

— das laufende Datum (D') zum Zeitpunkt der Karten-Benützung anzugeben,

— und in der zweiten Speicherzone (Z2) eine Information über das laufende Datum zu schreiben, dadurch gekennzeichnet, daß die Vorrichtung zur Verwendung der Karten ferner :

— Mittel zum Berechnen und zum Speichern einer Menge (I'), die zu dem Produkt aus dem in der ersten Speicherzone (Z1) gelesenen Restkredit (CR) und der Differenz (D'-D) zwischen dem laufenden Datum und dem in der zweiten Speicherzone gelesenen Datum proportional ist, umfaßt.

2. Vorrichtung zur Verwendung von Speicherkarten nach Anspruch 1, dadurch gekennzeichnet, daß sie Mittel zum Einschreiben einer Information in einer dritten Zone (Z3) des Kartenspeichers umfaßt, welche von der Menge (I'), die zu dem Produkt aus dem Restkredit (CR) und der Differenz zwischen beiden Daten (D'-D) proportional ist, abhängig ist.

3. Vorrichtung zur Verwendung von Karten nach Anspruch 2, dadurch gekennzeichnet, daß sie Mittel zum Lesen des Inhalts (I) der dritten Zone, Mittel zum Berechnen der Summe dieser Menge (I') und des in der dritten Zone ausgelesenen Inhalts (I) sowie Mittel zum Einschreiben dieser Summe in die dritte Speicherzone umfaßt.

4. Vorrichtung nach einem der Ansprüche 1 bis 3, dadurch gekennzeichnet, daß wenigstens eine der Speicherzonen eine einzige Adresse umfaßt und daß in dieser Zone die dieser Zone entsprechende Information als Ersatz für die vorher geschriebene Information eingeschrieben wird.

5. Vorrichtung nach einem der Ansprüche 1 bis 4, dadurch gekennzeichnet, daß wenigstens eine der Speicherzonen mehrere Adressen umfaßt und daß in dieser Zone die ensprechende Information an nacheinanderfolgenden Adressen, welche den nacheinanderfolgenden Verwendungen der Karte entsprechen, eingeschrieben wird.

6. Vorrichtung nach Anspruch 1, dadurch gekennzeichnet, daß sie Mittel zum Berechnen eines neuen verfügbaren Restkredits umfaßt, welcher die in der ersten Zone gelesenen Information darstellt, welche um den Wert der gelieferten Ware oder der gelieferten Dienstleistung vermindert, zu welcher die Proportionalmenge hinzuaddiert wird, sowie Mittel zum Einschreiben dieses neuen Restkredits in der ersten Speicherzone (Z1) der Karte umfaßt.

## Claims

1. A device for using prepayment memory cards, comprising at least one card reader (16), in which it is possible to introduce a prepayment card (20) in order to cause the supply of a goods or service item, said device being adapted to :
— read an item of information (CR) stored in a first memory zone (Z1) of the card, said information being representative of a credit remainder available in order to obtain goods or services,
— authorize the supply of such goods or service item if the information read corresponds to a sufficient credit,
— write in the first memory zone (Z1) an item of information corresponding to a new available credit remainder (CR'),
— read, in a second memory zone (Z2) of the card, date information (D) written in the said second zone,
— indicate the current date (D') at the moment of the use of the card,
— and write current date information in the said second memory zone (Z2) characterized in that the device for using prepayment cards furthermore comprises :
— means in order to calculate and memory-store a quantity (I') proportional to the product of the credit remainder (CR) read in the first memory zone (Z1) by the difference (D'-D) between the current date and the date read in the second memory zone.

2. The device for using prepayment cards as claimed in claim 1, characterized in that it comprises means in order to write, in a third memory zone (Z3), an item of information which is a function of the quantity (I') proportional to the product of the credit remainder (CR) multiplied by the difference between the two dates (D'-D).

3. The device for using prepayment cards as claimed in claim 1, characterized in that it comprises means in order to read the content (I) of the third zone, means in order to calculate the sum of the said quantity (I') and of the content (I) read in the third zone and means in order to write the said sum into the third memory zone.

4. The device for using prepayment cards as claimed in any one of the preceding claims 1 through 3, characterized in that at least one of the memory zones comprises a single address and in that, in this zone, information corresponding to this zone is written as a replacement for the information which has been previously written.

5. The device for using prepayment cards as claimed in any one of the preceding claims 1 through 4, characterized in that at least one of the memory zones comprises a plurality of addresses and in that, in this zone, the corresponding information is written at successive addresses corresponding to successive users of the card.

6. The device as claimed in claim 1, characterized in that it comprises means in order to calculate a new available remainder credit, which is representative of the information read in the first zone less the value of the goods or service item supplied and plus the said proportional quantity, and means in order to write this new credit remainder in the first memory zone (Z1) of the card.

FIG_1

FIG_2

| | | |
|---|---|---|
| Réception DCL | | Départ |
| Lecture CR | (Z1) | Lecture crédit résiduel |
| Lecture P | (ROM) | Lecture prix |
| CR' = CR - P | | Calcul nouveau crédit |
| CR' → A1 | (RAM) | Stockage nouveau crédit |

CR' ⩾ 0 ?  — non → "Crédit insuf." → Restitution → FIN

oui

| | | |
|---|---|---|
| Lecture D | (Z2) | Lecture date inscrite |
| Lecture D' | (H) | Lecture date courante |
| Calcul D'-D | | Calcul durée |
| D'-D → A2 | (RAM) | Stockage durée |
| Lecture CR | (Z1) | |
| Calcul CR.(D'-D) | | |
| Lecture k | (ROM) | Coefficient en ROM |
| I'= k CR.(D'-D) | | Calcul compensation |
| I' → A3 | (RAM) | Stockage compensation |
| Lecture I | Z3 | Lecture compensation précédente |
| Calcul I + I' | | Calcul compensation cumulée |
| I + I' → Z3 | (Z3) | Inscription compensation cumulée |
| CR' → Z1 | (Z1) | Inscription nouveau crédit |
| D' → Z2 | | Inscription date courante |
| VAL → Fourniture | | Autorisation distribution |
| INF | | Affichage infos |
| FIN | | |

FIG_3